# EUROPEAN PATENT APPLICATION

(11) **EP 2 958 003 A1**
(43) Date of publication of application: **23.12.2015**
(21) Application number: 15172040.6
(22) Date of filing: 15.06.2015
(51) Int. Cl.: G06F 3/0482, G06F 3/0485, G06F 3/0488

(54) **DISPLAY PROCESSOR, DISPLAY PROCESSING METHOD, ORDERING APPARATUS AND COMPUTER-EXECUTABLE PROGRAM**

(30) Priority: 16.06.2014 JP 2014123854
(71) Applicant: Fujifilm Corporation, Minato-ku Tokyo 106-8620 (JP)
(72) Inventor: KATSUMATA, Yukinori, Tokyo (JP); YOSHIDA, Masako, Tokyo (JP); NAKASHIMA, Teruyoshi, Tokyo (JP); NAGASAKA, Tomoya, Tokyo (JP)
(74) Representative: Klunker . Schmitt-Nilson . Hirsch

(57) **Abstract**

An ordering apparatus for printing has a touchscreen panel, where a user screen view (W1) is displayed. A list display area (R1) and a specific display area (R2) are defined in the user screen view (W1). Thumbnail images (P) of input images are displayed in the list display area (R1). A particular thumbnail image (T) of a designated input image for printing is displayed in the specific display area (R2). The thumbnail images (P) are displayed in an upward and downward scrollable manner. The particular thumbnail image (T) is displayed in a scrollable manner to the right or left. Thus, erroneous scroll in an unintended display area of a screen view can be prevented effectively.

## Description

### BACKGROUND OF THE INVENTION

### 1. Field of the Invention

The present invention relates to a display processor, display processing method, ordering apparatus and computer-executable program. More particularly, the present invention relates to a display processor and display processing method in which a touchscreen panel can be manually operated without an error in scrolling a display area, and ordering apparatus and computer-executable program.

### 2. Description Related to the Prior Art

An ordering apparatus for placement of an order of printing images is known, the images having been originally photographed by a digital camera or a mobile telephone having a camera. Also, there is an ordering system in which an order is placed by use of a personal computer and a communication network. A storage medium, such as a memory card, stores the images. For ordering, the images are read from the storage medium, displayed on a monitor display panel or the like, and designated manually by a user for inputs of the order.

A GUI (graphical user interface) of a display device is used in the ordering apparatus as a user interface for placing an order. Various functions are included in the GUI for aiding designation of images in the placement of the order. JP-A 2007-060562 and JP-A 2000-113204 disclose an example of the ordering apparatus. A list display area displays the images read out from the storage medium or the like. A user or customer views the list display area and designates images desired for printing among the displayed images. A specific display area displays the designated images. In those documents, the specific display area is disposed under the list display area.

Assuming that it is impossible to display all of the numerous images simultaneously on a screen view (the list display area and the specific display area), techniques of changeover of pages or scroll are used to display non-displayed images. In JP-A 2007-060562, plural images are displayed in plural arrays in first and second display areas. Assuming that a user wishes to view non-displayed images, the screen view is scrolled vertically up or down to display the non-displayed images.

A scroll bar is indicated in the screen view. A pointing device is manually operated to shift the scroll bar by dragging for scrolling the screen view. A widely used example of the pointing device is a touchscreen panel (touch sensor) in the ordering apparatus. In addition to shifting the scroll bar, it is possible in the touchscreen panel to scroll the screen view by shifting a touch position of a touch of a finger of the screen view, namely, by dragging or flicking on the touchscreen panel.

In the use of the touchscreen panel as the pointing device, there arises a problem of errors in manual touch. Assuming that a user wishes to scroll one of the list display area and the specific display area, he or she is likely to scroll a remaining one of the list display area and the specific display area. A reason of the problem is offsetting of the touch position typically in dragging or flicking a portion near to a borderline between the list display area and the specific display area. Also, an error occurs in case the touch position comes from one of the list display area and the specific display area to the remainder of the list display area and the specific display area in the course of shifting the touch position.

### SUMMARY OF THE INVENTION

In view of the foregoing problems, an object of the present invention is to provide a display processor and display processing method in which a touchscreen panel can be manually operated without an error in scrolling a display area, and ordering apparatus and computer-executable program.

In order to achieve the above and other objects and advantages of this invention, a display processor includes a display device having a screen view including a list display area and a specific display area. A touch sensor has a first sensor area disposed with the list display area and a second sensor area disposed with the specific display area. A first display control unit displays plural input images in the list display area in a scrollable manner in a first scroll direction selected from vertical and horizontal directions. An image determiner designates at least one designated image among the input images in the list display area. A second display control unit displays the designated image in the specific display area in a scrollable manner in a second scroll direction selected from the vertical and horizontal directions and different from the first scroll direction. A scroll control unit causes the first display control unit to scroll the input images in the list display area in the first scroll direction in case a touch position of a touch with the first sensor area shifts in the first scroll direction, and causes the second display control unit to scroll the designated image in the specific display area in the second scroll direction in case a touch position of a touch with the second sensor area shifts in the second scroll direction.

Preferably, the second display control unit disposes the designated image of an array extending in the second scroll direction in the specific display area.

Preferably, the plural input images are arranged in the list display area in M arrays and N columns, where M and N are integers satisfying M < N. The designated image of one array is disposed in the specific display area.

Preferably, the first scroll direction is the vertical direction along the columns, and the second scroll direction is the horizontal direction along the arrays.

Preferably, in case the designated image in the specific display area is selected, the first display control unit performs control of flashing on a profile of one of the input images in the list display area corresponding to the selected image.

Preferably, in case one of the designated images in the specific display area is selected, and assuming that an image corresponding to the selected image is absent in the list display area, then the first display control unit changes over display for the corresponding image to appear in the list display area.

Preferably, the specific display area includes a belt portion with black color, and the designated image is disposed inside the belt portion.

Preferably, furthermore, a mode setting device changes over the first display control unit from a first display mode to a second display mode in case a predetermined condition of scrolling action is satisfied, wherein the first display control unit, upon being set in the first display mode, arranges the plural images in the list display area in arrays at a first display magnification, and upon being set in the second display mode, arranges more numerous images than the plural images in the first display mode in the list display area in arrays at a second display magnification smaller than the first display magnification.

Preferably, the predetermined condition is a condition in which a scroll speed of the images is equal to or higher than a threshold speed.

Preferably, the list display area in the second display mode is extended to an end of the screen view in the first scroll direction.

Preferably, the first display control unit in the second display mode displays reference indicia in the list display area to extend transversely to the first scroll direction.

Preferably, the first display control unit in the second display mode groups the plural images in plural groups, and displays the plural images in a grouped manner.

Also, an ordering apparatus is provided, and includes the display processor as defined above. An ordering device places an order of printing the designated image displayed in the specific display area.

Also, a display processing method includes a step of displaying a screen view including a list display area and a specific display area. Plural input images are displayed in the list display area in a scrollable manner in a first scroll direction selected from vertical and horizontal directions. At least one designated image among the input images is designated in the list display area. The designated image is displayed in the specific display area in a scrollable manner in a second scroll direction selected from the vertical and horizontal directions and different from the first scroll direction. The input images in the list display area are scrolled in the first scroll direction in case a touch position of a touch with a first sensor area of a touch sensor disposed with the list display area shifts in the first scroll direction, and the designated image in the specific display area is scrolled in the second scroll direction in case a touch position of a touch with a second sensor area of the touch sensor disposed with the specific display area shifts in the second scroll direction.

Also, a computer-executable program for display processing includes a display program code for displaying a screen view including a list display area and a specific display area. A first display control program code is for displaying plural input images in the list display area in a scrollable manner in a first scroll direction selected from vertical and horizontal directions. An image determining program code is for designating at least one designated image among the input images in the list display area. A second display control program code is for displaying the designated image in the specific display area in a scrollable manner in a second scroll direction selected from the vertical and horizontal directions and different from the first scroll direction. A scroll control program code is for scrolling the input images in the list display area in the first scroll direction in case a touch position of a touch with a first sensor area of a touch sensor disposed with the list display area shifts in the first scroll direction, and for scrolling the designated image in the specific display area in the second scroll direction in case a touch position of a touch with a second sensor area of the touch sensor disposed with the specific display area shifts in the second scroll direction.

Consequently, a touchscreen panel can be manually operated without an error in scrolling a display area, because a second scroll direction different from a firs scroll direction is defined for scroll images in a reliable manner.

### BRIEF DESCRIPTION OF THE DRAWINGS

The above objects and advantages of the present invention will become more apparent from the following detailed description when read in connection with the accompanying drawings, in which:
Fig. 1 is an explanatory view illustrating a printing system;
Fig. 2 is a block diagram schematically illustrating an ordering apparatus;
Fig. 3 is a block diagram schematically illustrating the ordering apparatus;
Fig. 4 is a plan illustrating a user screen view;
Fig. 5 is a plan illustrating the user screen view with which a specific screen view is in a non-displayed state;
Fig. 6 is a plan illustrating a thumbnail image in an editable state;
Fig. 7 is a flow chart illustrating control steps for scroll;
Fig. 8 is a plan illustrating the selected thumbnail image;
Fig. 9 is a plan illustrating an example of a different scroll direction;
Figs. 10A and 10B are plans illustrating another preferred embodiment in which shading is displayed for a designated image;
Figs. 11A and 11B are plans illustrating still another preferred embodiment in which a screen view is changed over between a user screen view and a full screen view;
Fig. 12 is a flow chart illustrating changeover between first and second display modes;
Fig. 13 is a plan illustrating the full screen view.

### DETAILED DESCRIPTION OF THE PREFERRED EMBODIMENT(S) OF THE PRESENT INVENTION

### [First embodiment]

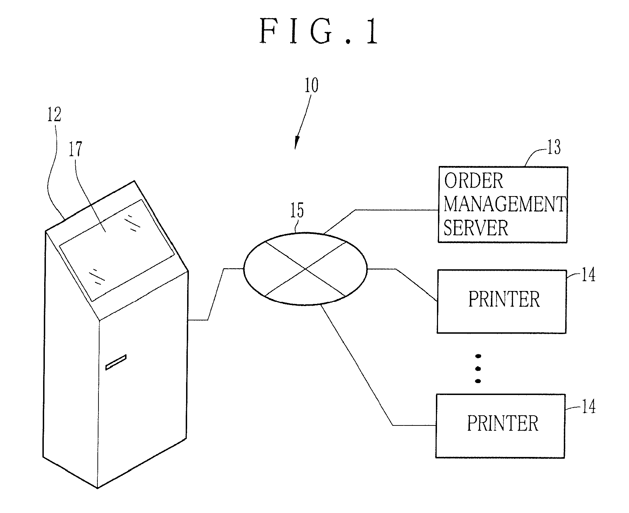

In Fig. 1, a remote printing system 10 (print order processing system) or online ordering system includes an ordering apparatus 12 with a display processor, an order management server 13 and a printer 14, which are connected with one another by a communication network 15. The ordering apparatus 12 is located in a store of a photo finisher or the like, and receives image data and order information, such as the number of prints, size of prints, method of supply, place of supply and the like. The ordering apparatus 12 sends the image data and the order information to the order management server 13. In Fig. 1, a single ordering apparatus 12 is illustrated. However, two or more of the ordering apparatuses 12 can be installed in one place.

A touchscreen panel 17 is incorporated in the ordering apparatus 12. A graphical user interface (GUI) is used in the touchscreen panel 17 as a user interface for placing an order, so that a user can operate the touchscreen panel 17 by viewing a screen view of the GUI.

The order management server 13 manages image data and order information for printing after reception in the ordering apparatus 12. The order management server 13 transmits the image data to the printer 14 according to the order information, to produce prints. The printer 14 is disposed together with the ordering apparatus 12 in a store or facilities. Also, a plurality of the printer 14 can be disposed for use. The order management server 13 selects one of the printer 14 of an optimum condition of the place and method of supply. Prints are produced by a selected one of the printer 14. The prints are supplied to a customer or user in the store, or are delivered to the user by shipment.

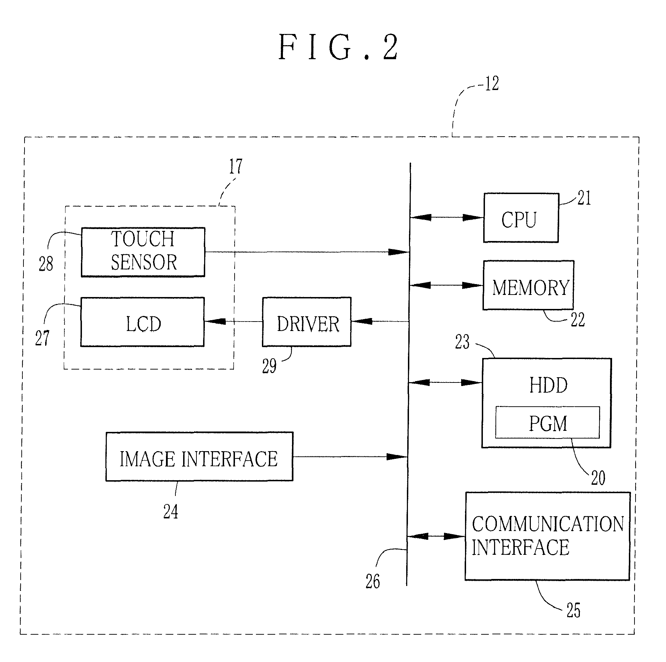

In Fig. 2, the ordering apparatus 12 is constituted by a widely used personal computer as a basis. Various computer-executable programs 20 are installed in the personal computer for functioning the ordering apparatus 12. The computer-executable programs 20 include an Operating System (OS) as a control program, order processing program such as an display processing program.

The ordering apparatus 12 includes a CPU 21 (central processing unit), a memory 22, a hard disk drive 23, an image interface 24, a communication interface 25 and the touchscreen panel 17. A data bus 26 interconnects those circuit devices of the ordering apparatus 12.

The CPU 21 performs a task of processing the order in the operation of the Operating System, and controls various circuit devices. The memory 22 includes a storage area for loading the computer-executable programs 20 (control program, order processing program and the like), and a working memory area for running the programs. The hard disk drive 23 stores the computer-executable programs 20, with which the memory 22 is loaded. Also, the hard disk drive 23 has an area for temporarily storing image data retrieved from a user upon receiving the order.

The image interface 24 inputs images to the ordering apparatus 12, and reads out image data from a digital camera, storage medium and the like. For example, the image interface 24 includes a memory card reader for a memory card of any one of various formats, and a communication interface for communication with the digital camera or smart phone (multi-function mobile telephone) by use of a wireless LAN or short range wireless communication. Thus, image data can be retrieved by various methods. The communication interface 25 performs communication with the order management server 13 by use of the communication network 15.

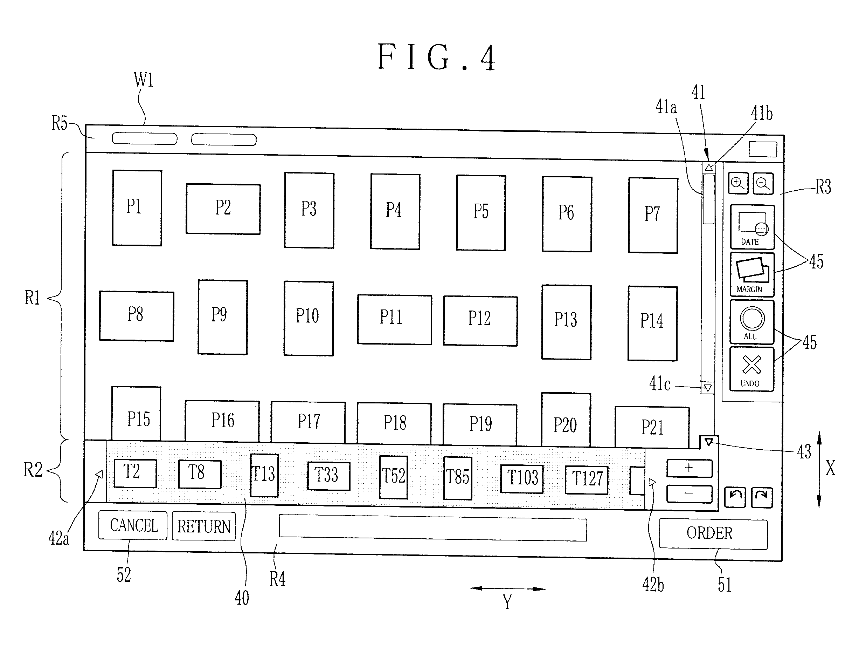

The touchscreen panel 17 includes a liquid crystal display device 27 (LCD device) and a touch sensor 28. A driver 29 drives the LCD device 27 to display a screen view of various types for receiving an order, such as a user screen view W1 of Fig. 4. An example of the display device can be an organic EL display device. The touch sensor 28 is disposed on a display surface of the LCD device 27, and outputs a detection signal according to a touch position. The touch sensor 28 is a pointing device for designating an input position in a screen view in the LCD device 27. The touch position is the input position.

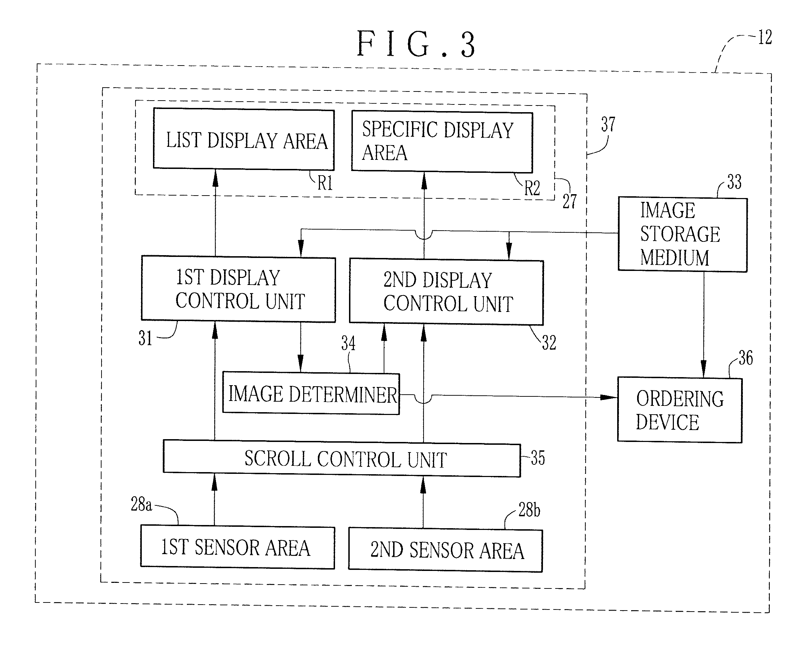

In Fig. 3, circuit devices in the ordering apparatus 12 where the order processing program is run include a first display control unit 31, a second display control unit 32, an image determiner 34, a scroll control unit 35 and an ordering device 36. A first sensor area 28a of the touch sensor 28 is disposed in a list display area R1 in the user screen view W1. A second sensor area 28b of the touch sensor 28 is disposed in a specific display area R2.

A display processor 37 includes the first display control unit 31, the second display control unit 32, the image determiner 34, the scroll control unit 35, the LCD device 27, the first sensor area 28a and the second sensor area 28b.

An image storage medium 33 is an area in the hard disk drive 23, and stores image data of images (input images) input from the image interface 24 to the ordering apparatus 12.

The first display control unit 31 performs display control of the list display area R1. There are thumbnail images P (P1, P2, ...) displayed in the list display area R1 as plural input images in Fig. 4. The first display control unit 31 reads out image data from the image storage medium 33 , creates the thumbnail images P (sample images) of a reduced size for respective input images, for display in the list display area R1 in a listed manner.

The first display control unit 31 arranges the thumbnail images P in plural arrays in the list display area R1 in a scrollable manner in a first scroll direction to be described later. Also, in case a particular thumbnail image T (T2, T8 or the like in Fig. 4) in the specific display area R2 is selected, the first display control unit 31 performs display control of indicating a profile of the thumbnail image P of interest by flashing in the list display area R1. Assuming that the thumbnail image P of interest is not displayed in the list display area R1, the thumbnail images P in the list display area R1 are scrolled to display the thumbnail image P of interest in the list display area R1.

The image determiner 34 designates an input image desired for printing, and is constituted by the touch sensor 28, the CPU 21 and the like. The image determiner 34 recognizes the designated thumbnail image P according to a touch position of tapping the touch sensor 28 and position information of the thumbnail image P from the first display control unit 31. The input image corresponding to the recognized thumbnail image P becomes a designated image for printing.

The second display control unit 32 performs display control of the specific display area R2. The specific display area R2 is an area of listing designated images. In response to designation of the thumbnail images P in the image determiner 34, the second display control unit 32 creates the particular thumbnail image T from image data of designated images by size reduction. The particular thumbnail image T is displayed in the specific display area R2. The second display control unit 32 sets the specific display area R2 with the particular thumbnail image T scrollable in the second scroll direction, to be described later.

The scroll control unit 35 controls scroll in the list display area R1 and the specific display area R2. In response to a shift of a touch position in the first sensor area 28a in the first scroll direction, the scroll control unit 35 causes the first display control unit 31 to scroll the thumbnail image P in the list display area R1 in the first scroll direction. In response to a shift of a touch position in the second sensor area 28b in the second scroll direction, the scroll control unit 35 causes the second display control unit 32 to scroll the particular thumbnail image T in the specific display area R2 in the second scroll direction.

The ordering device 36 transmits various data to the order management server 13, the data including image data of designated images corresponding to the particular thumbnail images T, the number of prints, size of prints, method of supply, place of supply, and the like. Thus, printing of the designated images indicated in the specific display area R2 is ordered.

In Fig. 4, the user screen view W1 is used for designating an image desired for printing, and appears on the touchscreen panel 17 in a manually operable manner of the GUI. The user screen view W1 includes the list display area R1, the specific display area R2, a menu display area R3, a lower display area R4 and an upper display area R5. The list display area R1 is controlled by the first display control unit 31. The specific display area R2 is controlled by the second display control unit 32.

Plural thumbnail images P are displayed in the list display area R1 as input images in a form of M arrays and N columns where M and N are natural numbers. The numbers M and N are predetermined as M < N, to reduce the number of times of scrolling, for a user readily to view the thumbnail images P in the list display area R1. In the example of Fig. 4, the thumbnail images P are arranged in three arrays and seven columns. The numbers M and N are not limited to the example but can be determined suitably for various purposes, for example, according to a display size (display magnification) of the thumbnail images P.

In case it is impossible to display all the thumbnail images P in the list display area R1 simultaneously, a vertical scroll bar 41 is displayed for upward or downward scroll in the vertical direction X in the list display area R1. The vertical direction of the scroll of the list display area R1 is herein referred to as a first scroll direction in relation to the user screen view W1. In short, the first scroll direction is a vertical direction of the user screen view W1, and a columnar direction of the thumbnail images P. Note that the terms of the vertical and horizontal directions are hereinafter used in relation to orientation of the user screen view W1.

The vertical scroll bar 41 includes a bar slider 41a or scroll box or knob, an upper scroll button 41b and a lower scroll button 41c. The thumbnail image P in the list display area R1 is scrolled upwards or downwards by dragging action of the bar slider 41a up or down, or tapping action or long pressing action of the upper or lower scroll button 41b or 41c. Also, the list display area R1 is scrolled upwards or downwards by dragging or flicking action of the list display area R1. Those actions are included in scroll of the list display area R1 in the first scroll direction.

Tapping is a brief touch of a finger on the touchscreen panel 17. For example, tapping on the upper scroll button 41b of the upward direction is a brief touch of a finger on a portion of the upper scroll button 41b in the touchscreen panel 17. Long touch is a continued touch of a finger on the touchscreen panel 17.

Dragging is action of touching the touchscreen panel 17 with a finger and shifting a touch position of the touch of the finger. For example, upward dragging of the list display area R1 is action of touching the touchscreen panel 17 with a finger and shifting a touch position of the touch of the finger in an upward direction. To be precise, the touch for dragging or flicking is made on a portion of the list display area R1 except for the vertical scroll bar 41. Note that a so-called swiping action in the field of a touchscreen device is herein included in the dragging action, the swiping action being shift of a touch position without touching the bar slider 41a or an icon, in contrast with the dragging action in the narrow sense as an action of shift of a touch position by touching the bar slider 41a or an icon.

The flicking action is a shift of a touch position in a manner similar to the dragging action, but different from the dragging action in that a finger is quickly shifted while the touch is maintained. For example, the flicking action in the list display area R1 in the downward direction is a touch of any position in the list display area R1 on the touchscreen panel 17 with a finger and a quick shift of the finger in the downward direction. Those steps are similar to such used in an apparatus having a touchscreen panel.

It is possible to tap any one of thumbnail images P in the list display area R1. An input image corresponding to the tapped thumbnail image P is a designated image for printing. Also, the thumbnail image P is set in the editable state for inputting the number of prints. Editing information or indicia (later to be described) is displayed with the editable thumbnail image P for informing the editable state. Assuming that another thumbnail image P is tapped, the editable state is changed over from the initial thumbnail image P to the newly tapped thumbnail image P.

In case a thumbnail image P which corresponds to the designated image but is not in the editable state is tapped, the thumbnail image P is set again in the editable state so that the number of prints can be set. In case the thumbnail image P of the editable state is tapped, designation of the image for printing is undone.

The specific display area R2 is horizontally long, and disposed under the list display area R1. Particular thumbnail images T of designated images designated in the list display area R1 are displayed in the specific display area R2. Assuming that designation of a particular thumbnail image T is undone in relation to printing the input image, the particular thumbnail image T is deleted from the specific display area R2. In the specific display area R2, plural particular thumbnail images T are arranged in one array.

The specific display area R2 has a belt portion 40 of a black background, in which the particular thumbnail images T are arranged. The specific display area R2 is disposed to overlap on a lower portion of the list display area R1, so that the list display area R1 is visible through the black background in a transparent form. The form of the black belt portion 40 is effective in facilitating a view of the particular thumbnail images T without influence of colors or the like of the thumbnail image P in the list display area R1 seen through the background.

In case it is impossible to display all the particular thumbnail images T in the specific display area R2 at one time, a non-displayed one of the particular thumbnail images T is scrollable to appear in the specific display area R2. A second scroll direction of the specific display area R2 is a horizontal direction Y, namely a direction of arrangement of the particular thumbnail images T. This is the horizontal direction of the user screen view W1 and along the array of the thumbnail images P.

A left side scroll button 42a or a right side scroll button 42b indicated in the specific display area R2 is tapped or pressed for long press, or dragged or flicked to the right or left in the specific display area R2. Action of those types is scroll in the second scroll direction in the specific display area R2. The particular thumbnail image T in the specific display area R2 is scrolled to the right or left.

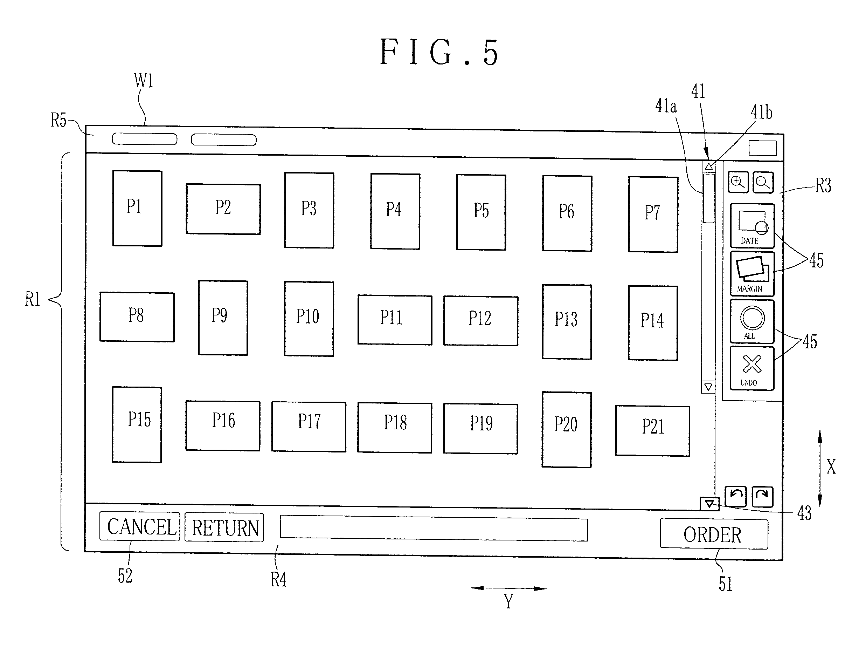

There is a changeover button 43, which is tapped to change over the specific display area R2 between a display state of Fig. 4 and a non-display state of Fig. 5. While the specific display area R2 is in the non-display state and in case an image to be printed is designated, then the specific display area R2 is automatically set in the display state.

Assuming that the particular thumbnail image T inside the specific display area R2 is designated by tapping action, a thumbnail image P corresponding to the particular thumbnail image T is set in the editable state. Also, in response to the tapping action for the particular thumbnail image T, the thumbnail image P is indicated in a clarified manner for a viewer by flashing of a profile of the thumbnail image P in a short period or intermittently.

After the particular thumbnail image T is selected and in case no thumbnail image P corresponding to the particular thumbnail image T is displayed in the list display area R1, then changeover of display or scroll is performed for the thumbnail image P to appear in the list display area R1. The profile of the thumbnail image P is indicated by flashing, and the thumbnail image P is set editable.

Plural menu buttons 45 are disposed in the menu display area R3. Examples of the menu buttons 45 include a date button, a margin button, a select-all button and an undo button. The date button is used for adding a calendar date into an image on a print. The margin button is used for producing prints with peripheral margins. The select-all button is used for designating all input images for printing. The undo button is used for undoing designation of images for printing.

An order button 51 and a cancel button 52 are displayed in the lower display area R4 under the specific display area R2. Tapping the order button 51 places an order for printing. Image data of designated images corresponding to particular thumbnail images T displayed in the specific display area R2 are uploaded to the order management server 13 with order information. To be precise, various steps relevant to placing the order are performed. A screen view of checking content of the order is displayed. A screen view of inputting a method and place of supply of prints is displayed. Then the image data are uploaded to the order management server 13.

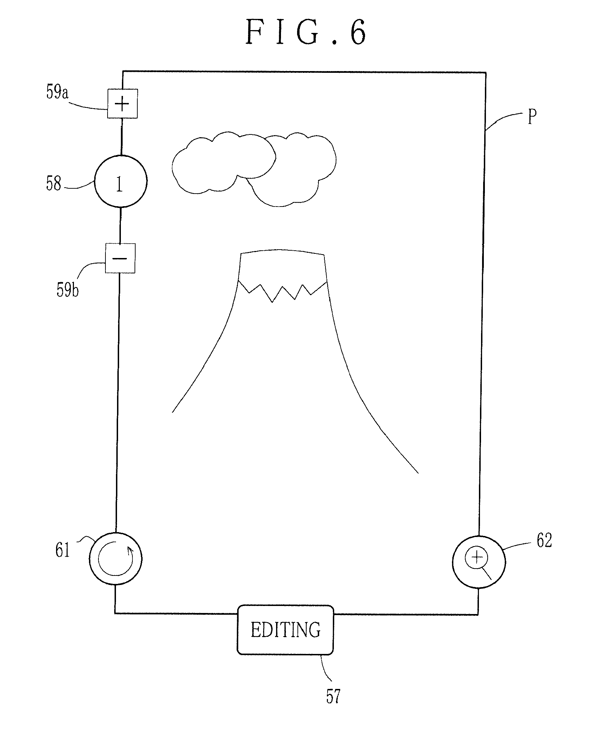

In Fig. 6, editing information 57 (message) is indicated with a thumbnail image P in the editable state. Plural types of information are displayed, including number information 58, an increment button 59a, a decrement button 59b, a rotation button 61 and an enlargement button 62. The number information 58 is information of the number of prints, and is caused to appear with the thumbnail image P irrespective of the editable state or non-editable state. The number of the prints can be stepped up or down by tapping of the increment and decrement buttons 59a and 59b. The rotation button 61 is operable to change over the image orientation between vertical and horizontal orientations. Tapping the enlargement button 62 causes an enlargement display area (not shown) for displaying an enlarged image in a manner different from the user screen view W1. Note that the editing information 57, the number information 58 and the like are not shown in Figs. 4, 5 and 8.

The list display area R1 is scrolled by the first display control unit 31 controlled by the scroll control unit 35. The specific display area R2 is scrolled by the second display control unit 32 controlled by the scroll control unit 35.

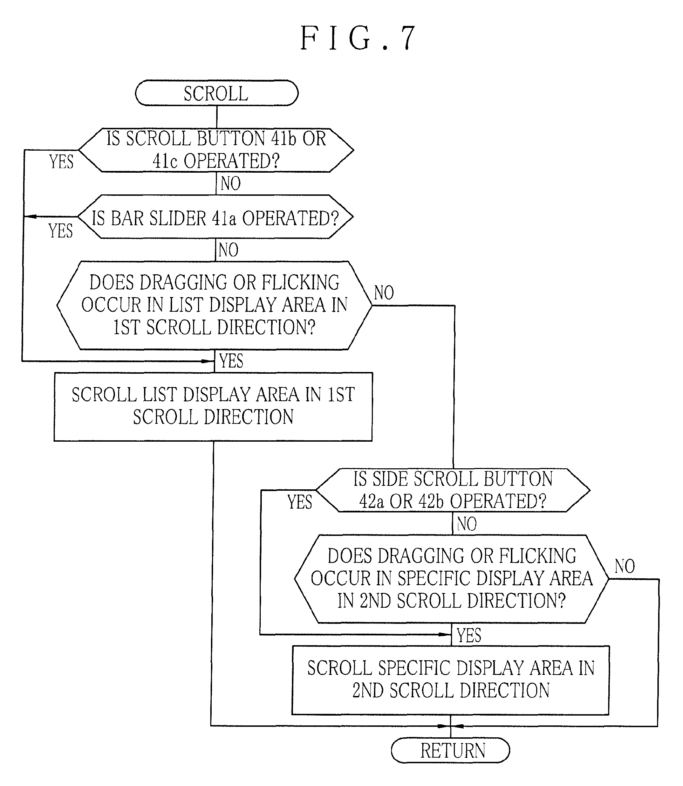

In Fig. 7, the scroll control unit 35 scrolls the thumbnail image P in the list display area R1 in the first scroll direction in case the bar slider 41a or the upper or lower scroll button 41b or 41c is operated or in case a dragging or flicking action occurs in the list display area R1 in the vertical direction or first scroll direction. Also, the scroll control unit 35 scrolls the particular thumbnail image T in the specific display area R2 in the horizontal direction or second scroll direction in case the right or left side scroll button 42a or 42b is operated or in case a dragging or flicking action occurs in the specific display area R2 in the second scroll direction. Note that the direction of the flicking and dragging actions may not be precisely equal to the first or second scroll direction.

Dragging and flicking in the list display area R1 in the first scroll direction are detected as a shift of a touch position in the first sensor area 28a in the first scroll direction. Dragging and flicking in the specific display area R2 in the second scroll direction are detected as a shift of a touch position in the second sensor area 28b in the second scroll direction.

The first scroll direction of the list display area R1 is the vertical direction (upward or downward). The second scroll direction of the specific display area R2 is the horizontal direction (to the right or left) different from the second scroll direction. Assuming that there occurs a flicking action or dragging action in the list display area R1 in the second scroll direction, no larger scroll than intended by the user occurs in the list display area R1. Similarly, assuming that there occurs a flicking action or dragging action in the specific display area R2 in the first scroll direction, no larger scroll than intended by the user occurs in the specific display area R2.

The operation of the ordering apparatus 12 is described now. To place an order for printing, a user or customer manually operates the touchscreen panel 17 of the ordering apparatus 12, and selects a format of a memory card for storing image data and interface standards for a digital camera or smart phone (portable communication equipment). Then he or she inserts the memory card in a memory card reader of the ordering apparatus 12. Otherwise, he or she sets the digital camera or smart phone in connection with the ordering apparatus 12 by use of a radio communication or the like.

In case reading of image data is instructed, image data is read out in the ordering apparatus 12 from the memory card, digital camera, smart phone or the like. The image data is stored in the image storage medium 33 as input images.

Upon completing storing of all the image data, the touchscreen panel 17 displays the user screen view W1. The first display control unit 31 successively reads out image data from the image storage medium 33, and generates the thumbnail images P for each of the input images. The thumbnail images P are arranged and displayed in the list display area R1 of the user screen view W1 in plural arrays. Assuming that the total of the thumbnail images P is more numerous than can be displayed in the list display area R1, the first display control unit 31 sets the list display area R1 scrollable upwards and downwards. Then the vertical scroll bar 41 is displayed with the list display area R1.

The user views the thumbnail images P displayed in the list display area R1, and taps a desired one of the thumbnail images P for printing. Tapping is detected by the image determiner 34 to specify the tapped thumbnail image P. The thumbnail image P becomes in an editable state. The editing information 57, the number information 58 and the like are indicated. An input image corresponding to the tapped thumbnail image P is a designated image, of which a particular thumbnail image T is created and displayed in the specific display area R2.

To view a non-displayed one of the thumbnail images P in relation with the list display area R1, the vertical scroll bar 41 is operated, or a portion of the list display area R1 is dragged or flicked. The dragging or flicking action is made upwards or downwards.

In case the dragging or flicking action is performed correctly in the list display area R1 upwards or downwards, the first sensor area 28a detects the dragging or flicking action, so that the scroll control unit 35 judges that the touch position in the list display area R1 has moved upwards or downwards. The scroll control unit 35 causes the first display control unit 31 to scroll the thumbnail image P upwards or downwards in the list display area R1. For example, in case a dragging action is performed in the upward direction, scroll is performed to shift the thumbnail image P upwards in the list display area R1. A non-displayed one of the thumbnail images P becomes displayed by an upward shift. Also, in case a dragging action is performed in the downward direction, scroll is performed and a non-displayed one of the thumbnail images P becomes displayed by a downward shift. In the situation of flicking, the operation is similar to that of dragging.

Input images for printing are designated by use of the thumbnail images P while the thumbnail images P are scrolled as described above. At each time that an input image for printing is designated, the particular thumbnail image T of the designated image is generated and added serially into the specific display area R2 for display. A user can view the designated image by referring to the particular thumbnail images T in the specific display area R2.

In case it is impossible to display all the particular thumbnail images T in the specific display area R2 after addition, the second display control unit 32 sets the particular thumbnail images T in a scrollable state to the right or left in the specific display area R2. In case the user wishes to view a non-displayed one of the particular thumbnail images T, he or she presses the right or left side scroll button 42a or 42b or performs dragging or flicking action in the specific display area R2. The dragging or flicking action is in a direction to the right or left.

In case the dragging or flicking action is performed correctly in the specific display area R2 to the right or left, the second sensor area 28b detects the dragging or flicking action, so that the scroll control unit 35 judges that the touch position in the specific display area R2 has shifted to the right or left. The scroll control unit 35 causes the second display control unit 32 to scroll the particular thumbnail image T to the right or left in the specific display area R2. For example, in case a dragging action is performed to the left, scroll is performed to shift the particular thumbnail image T to the left in the specific display area R2. A non-displayed one of the thumbnail images P becomes displayed by a shift to the left. Also, in case a dragging action is performed to the right, scroll is performed and a non-displayed one of the thumbnail images P becomes displayed by a shift to the right. In the situation of flicking, the operation is similar to that of dragging.

It is likely that a user erroneously performs the flicking or dragging action upwards or downwards in a state of placing a finger in the specific display area R2 with an intention of scrolling the list display area R1 upwards or downwards near to a borderline between the list display area R1 and the specific display area R2. However, the specific display area R2 cannot be scrolled upwards or downwards. No scroll of the particular thumbnail image T in the specific display area R2 occurs upwards or downwards. There is no larger scroll in the specific display area R2 than intended by the user. The particular thumbnail image T of interest in the specific display area R2 remains to appear without turning to the non-display state. Therefore, no scroll for the purpose of redisplaying the particular thumbnail image T of interest is necessary. The situation is the same also for the opposite sides. Namely, it is likely that a user erroneously performs the flicking or dragging action to the right or left in a state of placing a finger in the list display area R1 with an intention of scrolling the specific display area R2 to the right or left. However, no scroll of the thumbnail image P in the list display area R1 occurs to the right or left. There is no larger scroll in the list display area R1 than intended by the user.

Assuming that the user wishes to change the number of prints of designated images, or to check input images preceding or succeeding to a designated image, then he or she taps and selects the particular thumbnail image T corresponding to the designated image in the specific display area R2. Thus, the thumbnail image P corresponding to the particular thumbnail image T being selected is indicated by flashing, before an editable state of the particular thumbnail image T is set. Assuming that the thumbnail image P in correspondence is not displayed in the list display area R1 upon selecting the particular thumbnail image T, the thumbnail image P in the list display area R1 is scrolled upwards or downwards. The thumbnail image P becomes displayed, of which the portion of the profile is indicated by flashing, to set the editable state.

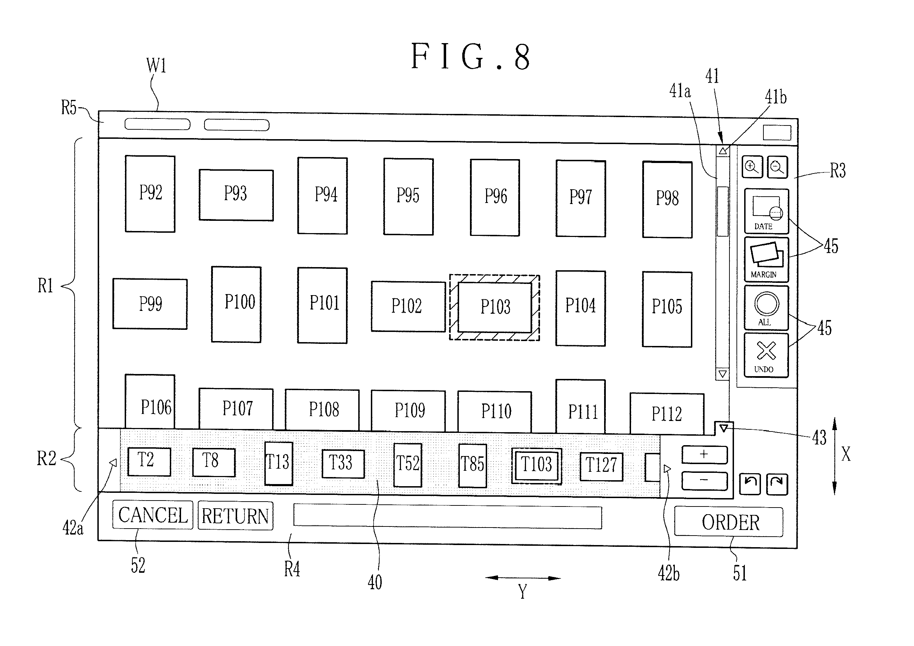

For example, let a particular thumbnail image T103 be selected in the specific display area R2 in Fig. 4. Assuming that a thumbnail image P103 corresponding to the particular thumbnail image T103 is not displayed in the list display area R1, then the list display area R1 is scrolled in the first scroll direction to shift up the thumbnail image P103 in Fig. 8, so that the thumbnail image P103 comes to appear in the list display area R1. Then lines of the profile of the thumbnail image P103 are indicated in a flashing manner. The thumbnail image P103 becomes editable. In Fig. 8, the particular thumbnail image T103 is surrounded by the phantom line to clarify the selection. Portions around the thumbnail image P103 are hatched for clarifying the flashing of the profile.

Consequently, the thumbnail image P of the designated image corresponding to the particular thumbnail image T displayed in the specific display area R2 can be checked in the list display area R1. It is possible to change the number of prints and check input images before or after the designated image.

After completing designation of prints, the order button 51 is tapped. Image data of designated images corresponding to particular thumbnail images T designated in the user screen view W1 and displayed in the specific display area R2 are uploaded to the order management server 13 together with the order information.

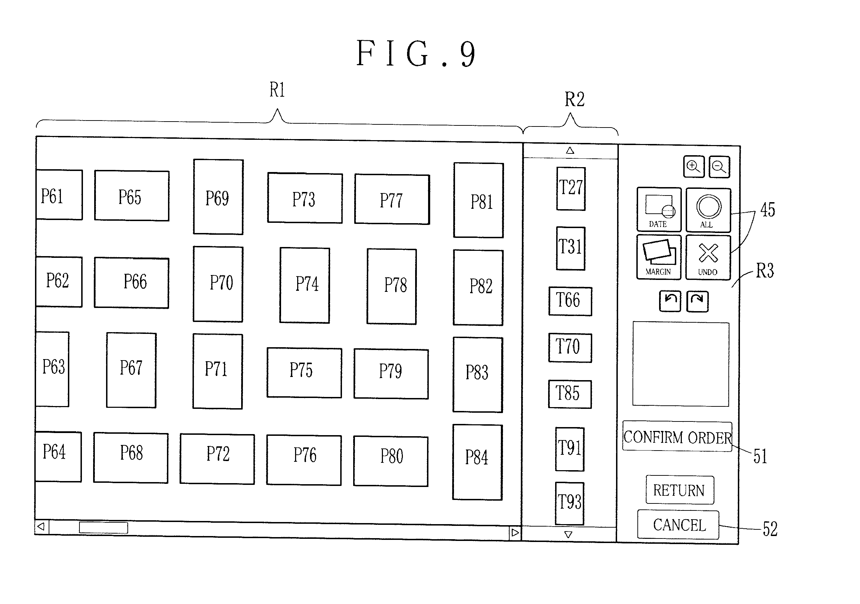

The first scroll direction of the list display area R1 can be either one of the horizontal and vertical directions. The second scroll direction of the specific display area R2 can be a remaining one of the horizontal and vertical directions different from the first scroll direction. For example, it is possible as illustrated in Fig. 9 to set the list display area R1 scrollable in the horizontal direction, and set the specific display area R2 scrollable in the vertical direction.

### [Second embodiment]

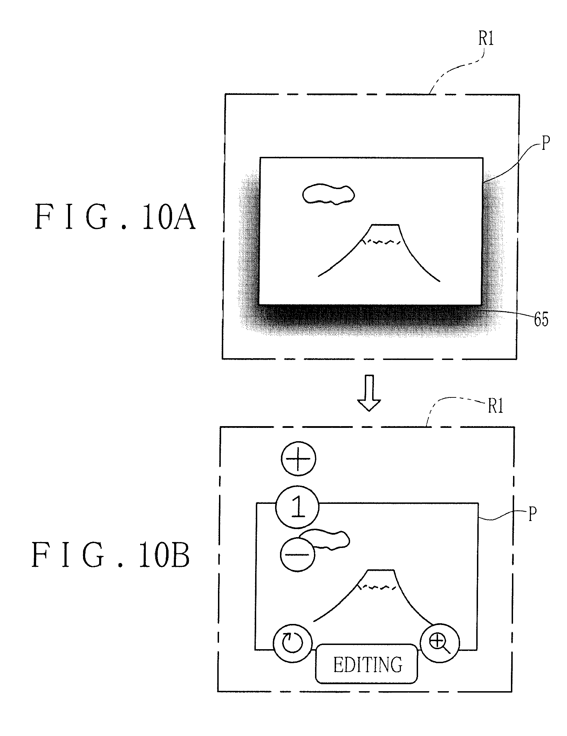

In Figs. 10A and 10B, one of a non-designated thumbnail images P among the thumbnail images P in the list display area R1 in a second embodiment is illustrated. Shading 65 or shadow is indicated with three side lines of the non-designated thumbnail image P, for an image view of a relief form in the display. The thumbnail image P designated by tapping does not have the shading 65, and is displayed with a view of a background state with retraction from the position of the non-designated thumbnail images P. This is effective in distinctly displaying the non-designated thumbnail images P and the designated thumbnail image P. For remaining portions of the embodiment, the first embodiment is repeated.

### [Third embodiment]

Images are displayed in a scrollable manner at a second display magnification smaller than a first display magnification in a normal scroll in a condition of satisfying predetermined conditions in relation to the scroll. Elements similar to those of the above embodiments are designated with identical reference numerals.

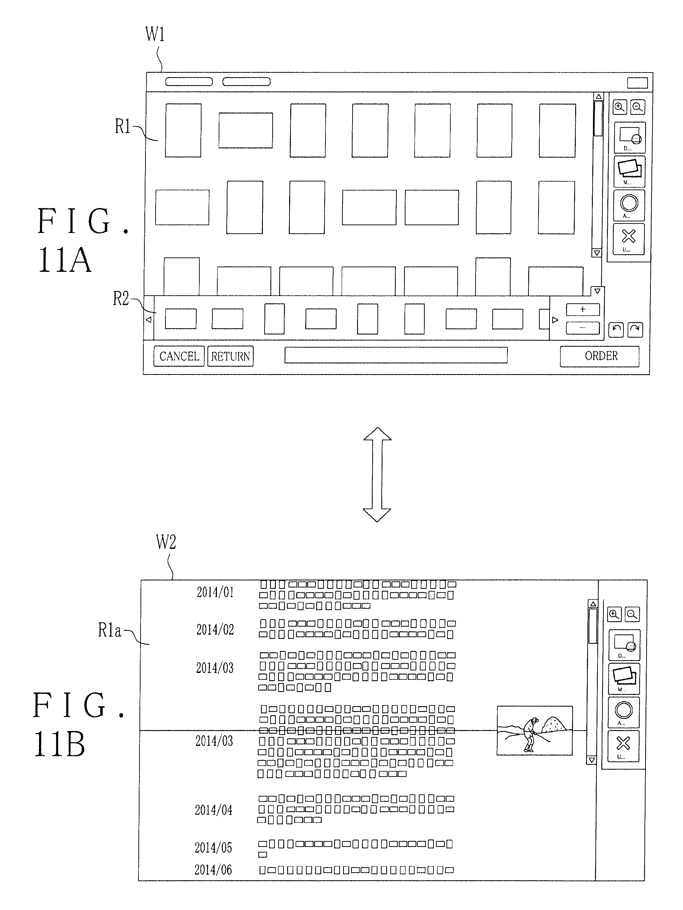

In Figs. 11A and 11B, a user interface processor (display processor) of the embodiment has a screen view changed over between the user screen view W1 in a first display mode and a full screen view W2 in a second display mode. The first display control unit 31 in Fig. 3 is functioned in the first and second display modes for display in the list display area R1. The first display mode is for using the user screen view W1 in Figs. 4 and 5. A plurality of thumbnail images P are arranged in M arrays and N columns in a size suitable for easy recognition of input images to be printed.

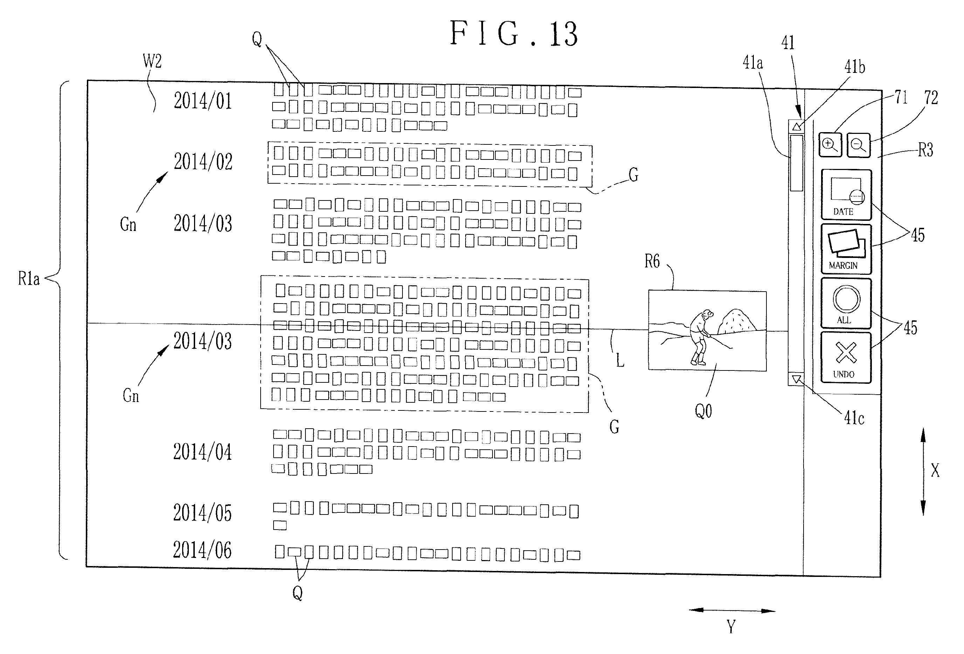

The second display mode is a mode for displaying a greater number of reduced thumbnail images Q in the list display area R1 than the number of the thumbnail images P in the first display mode in a still smaller size than the size of the thumbnail images P of the first display mode. See Fig. 13. The second display mode is for the purpose of rapidly scrolling and facilitating quick discovery of an estimated position and local area of an image of interest by a readily recognizable form of images in a larger scale than the first display mode. Let the thumbnail images P be displayed at a first display magnification in the first display mode. Let the reduced thumbnail images Q be displayed at a second display magnification in the second display mode. A relationship between the first and second display magnifications is relative. For example, let 1 be the first display magnification as a reference. The second display magnification is set smaller than the first display magnification. Consequently, the reduced thumbnail images Q are displayed at a smaller size than the thumbnail images P.

In case a predetermined condition related to the scroll is satisfied as will be described later, the first display control unit 31 changes over the display mode from the first display mode to the second display mode in response to a signal from the scroll control unit 35, so that a reduced thumbnail image Q is displayed in the list display area R1 and scroll is performed. The first display control unit 31 changes over the display mode from the second display mode to the first display mode in response to a return action for returning the display mode.

In relation to the list display area R1, the scroll control unit 35 causes the first display control unit 31 to scroll images upwards or downwards (in the first scroll direction) by operating the bar slider 41a or the upper or lower scroll button 41b or 41c, or by dragging or flicking the list display area R1 (to be more precise, dragging or flicking a portion of the list display area R1 except for the vertical scroll bar 41). Also, the scroll control unit 35 changes a scroll distance and scroll speed according to the scrolling action. The scroll distance is a distance of shifting an image on a screen view according to the scroll. The scroll speed is a speed of the image on the screen view according to the scroll.

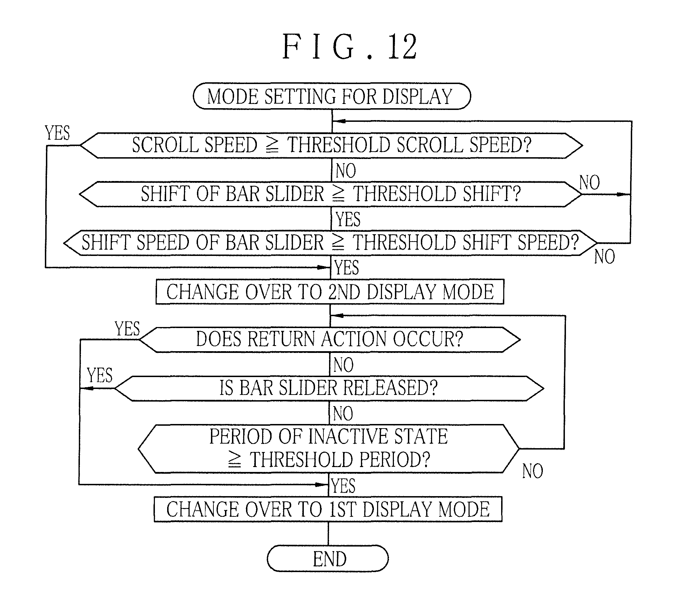

In Fig. 12, the scroll control unit 35 in the first display mode causes the first display control unit 31 to set the second display mode assuming that the scroll speed is equal to or higher than a threshold scroll speed and assuming that the bar slider 41a is shifted at a shift equal to or more than a threshold shift and at a shift speed equal to or more than a threshold shift speed. In short, conditions Nos. 1 and 2 to be described below are predetermined for the scroll. Note that it is possible in the first display control unit 31 to check satisfaction of predetermined conditions for the scroll.

Condition No. 1: the scroll speed is equal to or higher than the threshold scroll speed.

Condition No. 2: the bar slider 41a is shifted at a shift equal to or more than the threshold shift and at a shift speed equal to or more than the threshold shift speed.

Assuming that either one of the upper and lower scroll buttons 41b and 41c is operated individually and only at one time, the thumbnail image P in the list display area R1 is scrolled in the upward or downward direction according to the upper or lower scroll button 41b or 41c at a normal scroll distance and a normal scroll speed. Examples of a value of the normal scroll distance are a value equal to or smaller than a size of one array of the thumbnail image P, and a size of one frame in the list display area R1. Assuming that either one of the upper and lower scroll buttons 41b and 41c is consecutively operated or repeatedly operated in a predetermined period, the scroll control unit 35 sets the scroll distance of one event of the action larger than the normal scroll distance, and sets the scroll speed of one event of the action higher than the normal scroll speed. The scroll distance and scroll speed become larger according to highness in the number of events of the action. Long press of either one of the upper and lower scroll buttons 41b and 41c sets the scroll speed higher than the normal scroll speed, and increases the scroll speed according to a period of the long press.

The scroll speed of the thumbnail image P in the list display area R1 in either of the upward and downward directions is gradually increased by consecutive press or long press of one of the upper and lower scroll buttons 41b and 41c. In case the scroll speed becomes equal to or higher than a threshold speed after the step of consecutive press or long press of one of the upper and lower scroll buttons 41b and 41c during a period of equal to or more than a predetermined period, then the display mode is changed over to the second display mode. In short, the display mode is changed over from the first display mode to the second display mode in case it is judged that the viewer wishes to perform quick scroll for viewing.

The scroll speed of the thumbnail image P in the list display area R1 is changeable according to consecutive flicking in the list display area R1, or action speed of flicking or dragging. For example, occurrence of flicking actions in a consecutive manner (for example, three flicking actions per one second) causes a scroll distance and scroll speed to be larger per one action according to an increase in the number of the flicking actions. Also, the scroll speed increases according to an increase in the action speed of flicking or dragging, namely, a shift speed of a touch position. In the flicking, the scroll speed is higher than the shift speed of the touch position assuming that an initial shift speed of the touch position becomes equal to or higher than a predetermined threshold. Thus, the display mode changes over from the first display mode to the second display mode in case the scroll speed is set equal to or higher than the threshold speed by flicking or dragging.

In dragging of the bar slider 41a, a shift of the bar slider 41a being dragged is approximately proportional to the scroll distance. A shift speed of the bar slider 41a being dragged is approximately proportional to a shift speed of the scroll. Assuming that the shift of the bar slider 41a is sufficiently large and assuming that the shift speed is sufficiently high, then the second display mode is set, because it can be judged that a user wishes to perform quick scroll. Note that predetermined conditions for the scroll can be other conditions, and can be that a scroll distance of the bar slider 41a is equal to or more than a threshold scroll distance and that a scroll speed of the bar slider 41a is equal to or more than a threshold scroll speed, instead of the conditions related to the shift and shift speed of the bar slider 41a.

Predetermined conditions for the scroll are not limited to the above embodiment, but can be determined according to manual action associated with a user's intention for quick scroll, or movement of a finger according to the manual action. For example, a predetermined condition can be consecutive actions of either one of the upper and lower scroll buttons 41b and 41c, or continuation of long press of the same for a period equal to or more than a predetermined period. Also, a predetermined condition can be a flicking or dragging action at a speed equal to or more than a predetermined speed.

In the second display mode, the full screen view W2 illustrated in Fig. 13 is displayed. The full screen view W2 is constituted by extending the list display area R1 of the user screen view W1 to an end of the user screen view W1 in the scroll direction. In Fig. 13, let R1a be the extended list display area. Also, the full screen view W2 has a menu display area R3 in addition to the list display area R1a. The vertical scroll bar 41 is still indicated in the list display area R1a. The reduced thumbnail image Q in the list display area R1a can be scrolled in the first scroll direction upwards or downwards by pressing the vertical scroll bar 41, or dragging or flicking in the list display area R1a.

For changeover to the second display mode, the specific display area R2, the lower display area R4 and the upper display area R5 are not displayed, not to display the full screen view W2. For changeover from the user screen view W1 in the first display mode to the full screen view W2 in the second display mode, it is preferable to display a transition image of animation or the like for gradually changing a screen view, for example, to contain the specific display area R2 and the lower display area R4 into a lower portion of the user screen view W1 or to contain the upper display area R5 into an upper portion of the user screen view W1, in the course of extension of the list display area R1. Thus, a user is enabled readily to recognize the changeover in the display in a certain condition even upon the setting in the second display mode without his or her intention. Furthermore, it is preferable to display a transition image of animation or the like by gradually reducing the thumbnail images P to display the reduced thumbnail images Q.

The reduced thumbnail images Q described above are displayed in the list display area R1a. The reduced thumbnail images Q are grouped according to a predetermined criterion, and displayed in a grouped manner. In the embodiment, those are grouped according to a calendar date of imaging. One group G is constituted by reduced thumbnail images Q with the same calendar date of imaging. Plural groups G are arranged in the vertical direction according to a sequence of calendar dates inside the list display area R1a. Group names Gn are indicated beside respectively the groups G, namely on the left side in the screen view. The group names Gn are captions or name information of the groups.

In the group G, plural reduced thumbnail images Q are arranged in plural arrays. A maximum number of the reduced thumbnail images Q arranged in the group G is M x N. Namely, the number of the thumbnail images P displayable in the list display area R1 of the user screen view W1 in the first display mode is 21, and equal to the number of the reduced thumbnail images Q displayable in one array perpendicular to the scroll direction in the list display area R1a of the full screen view W2 in the second display mode. This is for the purpose of facilitating recognition by displaying thumbnail images P corresponding to the reduced thumbnail images Q in one array in the list display area R1 upon changeover from the second display mode to the first display mode. In the embodiment, 21 reduced thumbnail images Q are displayable in each one array.

A group distance between adjacent groups G is set larger than that between adjacent reduced thumbnail images Q in the vertical direction in each one group G. The reduced thumbnail images Q are caused to appear visibly in a grouped manner for each of the groups G. Note that assuming that the reduced thumbnail images Q are displayed in their original aspect ratios, irregular spaces are formed between the images according to differences in the aspect ratios, so that grouping of the reduced thumbnail images Q cannot be distinct. For such a problem, it is effective to trim the reduced thumbnail images Q regularly in a regular quadrilateral, and display those tightly without spaces in a manner of tiles, so as to clarify the grouping.

The criterion of grouping is not limited to the calendar date. A preferable example of criterion of grouping is a historical event derived according to calendar dates and interval between the calendar dates. For example, images of two or more successive calendar dates are grouped in one group of a first historical event. Images of calendar dates with differences of three days or so are grouped in a group of a second historical event. Also, an example of criterion of grouping can be a face image of a face of an identical individual in images according to face recognition of image analysis of the images.

A reference line L (reference indicia) is indicated at the center of the list display area R1a as a linear form extending in the horizontal direction and in a stationary manner. The reference line L is perpendicular to the scroll direction at the center of the scroll direction. Assuming that scroll of the list display area R1a is performed in the horizontal direction, the reference line L is set to extend in the vertical direction. Note that the position of the reference line L is not limited to the center with reference to the scroll direction. Reduced thumbnail images Q are controlled for display control to move past the reference line L in the course of shift with the scroll. Furthermore, the reference indicia can be in a shape other than a linear form. For example, reference indicia of a quadrilateral frame can be used for containing reduced thumbnail images of one array.

In the full screen view W2, the very numerous reduced thumbnail images Q of a small size are scrollable. It is difficult for a user exactly to pay attention to the reduced thumbnail images Q with his or her eye point. In view of this, the stationary reference line L is indicated as an aid for paying attention. It is possible for the user easily to find desired images by searching the reduced thumbnail images Q.

A pop-up area R6 for displaying a representative image Q0 is disposed on a right side from an area of displaying the reduced thumbnail image Q in the list display area R1a. The first display control unit 31 selects the representative image Q0 among the reduced thumbnail images Q in the group G where the reference line L passes. The representative image Q0 is displayed in the pop-up area R6 in a larger manner than the reduced thumbnail images Q, namely, at a third display magnification larger than the second display magnification. The representative image Q0 changes over at each time that a group G passes the reference line L. Note that it is preferable to create the representative image Q0 displayed at the third display magnification from one input image corresponding to the reduced thumbnail image Q.

The selection of the representative image Q0 can be based on various methods, for example, according to the earliest calendar date among the images in the group G. Also, a representative image Q0 can be an image of a sharpest focus among the images in the group G by use of the image recognition. A representative image Q0 can be selected from the reduced thumbnail images Q of one array where the reference line L passes. For this structure, the representative image Q0 is changed over at each time of changeover of the array of the reduced thumbnail images Q where the reference line L passes.

In the full screen view W2, the reduced thumbnail images Q are displayed respectively in a small size as described above. However, the representative image Q0 is displayed largely to facilitate recognition of a display range or a group G of interest.

In case changeover from the first display mode to the second display mode is performed to change over from the user screen view W1 to the full screen view W2, scroll in the list display area R1a can be also performed. However, a scroll speed in the second display mode is set lower than a scroll speed before changeover to the second display mode. This is because more numerous reduced thumbnail images Q are displayed in the list display area R1a in the second display mode than in the first display mode, and images can be searched at a short time even with the low scroll speed. Also, a reduced thumbnail image Q and a group G of interest can be discovered more easily with the low scroll speed.

In Fig. 12, the display mode is changed over from the second display mode to the first display mode in response to one of various actions, such as a return action for the display modes, release of operation to the bar slider 41a, and lapse of time of continuing an active or inactive state of the upper and lower scroll buttons 41b and 41c for a period equal to or more than a predetermined period. In the present embodiment, examples of the return action are tapping of an enlargement button 71 and a reduction button 72 for increasing and decreasing a display magnification of a thumbnail image, and tapping of a reduction thumbnail image Q in the list display area R1a.

Tapping a reduced thumbnail image Q in the list display area R1a causes the list display area R1 of the first display mode to display reduced thumbnail images Q of one array including the tapped reduced thumbnail image Q. Such operation frequently occurs in a situation of intention for enlargement of the reduced thumbnail image Q to view. Thus, the tapping action is useful in selectively displaying a thumbnail image P of interest, or plural thumbnail images P around the thumbnail image P of interest.

In case the enlargement button 71 or the reduction button 72 is tapped, each of the reduced thumbnail images Q in one array overlapped on the reference line L is displayed in the list display area R1 displayed in the first display mode. It is easily possible irrespective of high skill to set the array of images of interest on the reference line L and to operate the enlargement button 71 or the reduction button 72 for changing a display size (display magnification) of the images. Thus, those actions can be preferably allocated as the return action. Note that a size manually input by a user can be preferably used for a display size (display magnification) of the thumbnail images P in the list display area R1 in the course of the first display mode with the enlargement button 71 or the reduction button 72, because the number of times of manual actions of the user can be reduced effectively.

In case a finger is left from the bar slider 41a, the reduced thumbnail images Q of the array where the reference line L passes at the same time are displayed in the list display area R1 in the state of the first display mode. Consequently, no further tapping of a reduced thumbnail image Q is required, so that the operation can be simplified to increase efficiency. The first display mode is set at the end of manual action. It is possible to display a thumbnail image P of interest or thumbnail images P around the thumbnail image P of interest even in view of a user without high skill in manual input operation.

In case the time of the inactive state without being operated becomes equal to or more than predetermined threshold, the first display mode is set. The reduced thumbnail images Q of one array where the reference line L is passed are displayed in the list display area R1. It is estimated that the time of the inactive state without being operated becomes equal to or more than the predetermined threshold. The feature of the example is effective in setting the first display mode automatically, so that users can be free from complicated manual handling.

Furthermore, it is also preferable to display a transition image of animation or the like in changeover from the second display mode to the first display mode in a manner similar to the above-described changeover from the first display mode to the second display mode.

In the ordering apparatus (uploader), it is necessary to designate images desired for printing among a very great number of candidate images. Checking the images for searching and discovering images of interest requires much time and labor to a user. Assuming that the user or customer does not know functions which are installed in the ordering apparatuses, he or she must take much time for searching images manually with a low efficiency.

However, in case the predetermined condition for scroll is satisfied as described above, the display is changed over from the first display mode to the second display mode by the user's simple action associated with intention to quick search or quick reach to an image of interest, so as to change over the user screen view W1 to the full screen view W2. It is possible efficiently to search or reach the image of interest (reduced thumbnail image Q) by viewing the full screen view W2. Even assuming that the user is unaware of the technique of the second display mode, he or she can operate for ordering by utilizing advantage of the feature.

The display processor of the invention is a component included in the printing system, and connected with the printer 14. The communication network 15 is a data communication network specialized for the printing system. However, a display processor can be connected only to the order management server 13 without connection to the printer 14. A photo finisher can connect the order management server 13 to the printer 14 by use of an intranet in his or her company or a connection interface, and can input a user's image data to the printer 14 from the order management server 13, for the purpose of printing. In compliance with this, an example of the communication network 15 can be the Internet.

In the above embodiment, the feature of the invention is used in the ordering apparatus. However, a display processor according to the invention can be used for other purposes in relation to display processing and image uploading. Furthermore, a computer-executable program for the display processing can be installed in a computer of an individual user for home use.

Furthermore, it is possible to use the feature of the display processor of the invention in an uploader for the purpose of online ordering for editing a photograph album or booklet, online ordering for website design of a website, and the like.

According to one preferred embodiment mode of the invention, a display processor includes a display device for displaying a screen view including a list display area. A first display control unit displays plural input images in the list display area in a scrollable manner. A scroll control unit causes the first display control unit to scroll the images in the list display area upon occurrence of scrolling action. A mode setting device changes over the first display control unit from a first display mode to a second display mode in case a predetermined condition of the scrolling action is satisfied, wherein the first display control unit, upon being set in the first display mode, arranges the plural images in the list display area in arrays at a first display magnification, and upon being set in the second display mode, arranges more numerous images than the plural images in the first display mode in the list display area in arrays at a second display magnification smaller than the first display magnification.

Preferably, the predetermined condition is a condition in which a scroll speed of the images is equal to or higher than a threshold speed.

Preferably, a number of images displayable in the list display area in the first display mode is equal to a number of images displayable in an array extending transversely to a scroll direction of the scrolling action in the second display mode.

Preferably, the list display area in the second display mode is extended to an end of the screen view in a scroll direction of the scrolling action.

Preferably, the first display control unit in the second display mode displays reference indicia in the list display area to extend transversely to a scroll direction of the scrolling action.

Preferably, the first display control unit displays the images of an array overlapped on the reference indicia in the list display area upon changeover from the second display mode to the first display mode.

Preferably, the first display control unit displays an array of images in the list display area in a manner inclusive of the image designated in changeover to the first display mode upon changeover from the second display mode to the first display mode.

Preferably, the first display control unit in the second display mode groups the plural images in plural groups, and displays the plural images in a grouped manner.

Preferably, the first display control unit selects a representative image from one of the groups overlapped on the reference indicia, and enlarges and displays the representative image by use of a third display magnification larger than the second display magnification.

Preferably, the first display control unit changes over from the second display mode to the first display mode when an inactive state without external operation is continued in a period equal to or more than a threshold period, or when a return action for the display modes occurs.

According to another preferred embodiment mode of the invention, an ordering apparatus includes the display processor as defined above. The display device further displays a specific display area for displaying at least one designated image designated among the images in the list display area. An ordering device places an order of printing the designated image displayed in the specific display area.

According to still another preferred embodiment mode of the invention, a display processing method includes a step of displaying a screen view including a list display area. Plural input images are displayed in the list display area in a scrollable manner. The images are scrolled in the list display area upon occurrence of scrolling action. There is a step of changing over from a first display mode to a second display mode in case a predetermined condition of the scrolling action is satisfied, wherein, upon being set in the first display mode, the plural images are arranged in the list display area in arrays at a first display magnification, and upon being set in the second display mode, more numerous images than the plural images in the first display mode are arranged in the list display area in arrays at a second display magnification smaller than the first display magnification.

According to another preferred embodiment mode of the invention, a computer-executable program for display processing is provided, and includes a display program code for displaying a screen view including a list display area. A display control program code is for displaying plural input images in the list display area in a scrollable manner. A scrolling program code is for scrolling the images in the list display area upon occurrence of scrolling action. A mode setting program code is for changing over from a first display mode to a second display mode in case a predetermined condition of the scrolling action is satisfied, wherein, upon being set in the first display mode, the plural images are arranged in the list display area in arrays at a first display magnification, and upon being set in the second display mode, more numerous images than the plural images in the first display mode are arranged in the list display area in arrays at a second display magnification smaller than the first display magnification.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A display processor **characterized in** comprising:
a display device (27) having a screen view (W1, W2) including a list display area (R1, R1a) and a specific display area (R2);
a touch sensor (28) having a first sensor area (28a) disposed with said list display area and a second sensor area (28b) disposed with said specific display area;
a first display control unit (31) for displaying plural input images (P) in said list display area in a scrollable manner in a first scroll direction (X) selected from vertical and horizontal directions;
an image determiner (34) for designating at least one designated image (T) among said input images in said list display area;
a second display control unit (32) for displaying said designated image in said specific display area in a scrollable manner in a second scroll direction (Y) selected from said vertical and horizontal directions and different from said first scroll direction;
a scroll control unit (35) for causing said first display control unit to scroll said input images in said list display area in said first scroll direction in case a touch position of a touch with said first sensor area shifts in said first scroll direction, and for causing said second display control unit to scroll said designated image in said specific display area in said second scroll direction in case a touch position of a touch with said second sensor area shifts in said second scroll direction.

2. A display processor as defined in claim 1, **characterized in that** said second display control unit disposes said designated image of an array extending in said second scroll direction in said specific display area.

3. A display processor as defined in claim 1 or 2, **characterized in that** said plural input images are arranged in said list display area in M arrays and N columns, where M and N are integers satisfying M < N;
said designated image of one array is disposed in said specific display area.

4. A display processor as defined in claim 3, **characterized in that** said first scroll direction is said vertical direction along said columns, and said second scroll direction is said horizontal direction along said arrays.

5. A display processor as defined in any one of claims 1 to 4, **characterized in that** in case said designated image in said specific display area is selected, said first display control unit performs control of flashing on a profile of one of said input images in said list display area corresponding to said selected image.

6. A display processor as defined in any one of claims 1 to 5, **characterized in that** in case one of said designated images in said specific display area is selected, and assuming that an image corresponding to said selected image is absent in said list display area, then said first display control unit changes over display for said corresponding image to appear in said list display area.

7. A display processor as defined in any one of claims 1 to 6, **characterized in that** said specific display area includes a belt portion with black color, and said designated image is disposed inside said belt portion.

8. A display processor as defined in any one of claims 1 to 7, **characterized in** further comprising a mode setting device for changing over said first display control unit from a first display mode to a second display mode in case a predetermined condition of scrolling action is satisfied, wherein said first display control unit, upon being set in said first display mode, arranges said plural images in said list display area in arrays at a first display magnification, and upon being set in said second display mode, arranges more numerous images than said plural images in said first display mode in said list display area in arrays at a second display magnification smaller than said first display magnification.

9. A display processor as defined in claim 8, **characterized in that** said predetermined condition is a condition in which a scroll speed of said images is equal to or higher than a threshold speed.

10. A display processor as defined in claim 8 or 9, **characterized in that** said list display area in said second display mode is extended to an end of said screen view in said first scroll direction.

11. A display processor as defined in any one of claims 8 to 10, **characterized in that** said first display control unit in said second display mode displays reference indicia in said list display area to extend transversely to said first scroll direction.

12. A display processor as defined in any one of claims 8 to 11, **characterized in that** said first display control unit in said second display mode groups said plural images in plural groups, and displays said plural images in a grouped manner.

13. An ordering apparatus **characterized in** comprising:
the display processor as defined in any one of claims 1 to 12; and
an ordering device (36) for placing an order of printing said designated image (T) displayed in said specific display area (R2).

14. A display processing method **characterized in** comprising steps of:
displaying a screen view (W1, W2) including a list display area (R1, R1a) and a specific display area (R2);
displaying plural input images (P) in said list display area in a scrollable manner in a first scroll direction (X) selected from vertical and horizontal directions;
designating at least one designated image (T) among said input images in said list display area;
displaying said designated image in said specific display area in a scrollable manner in a second scroll direction (Y) selected from said vertical and horizontal directions and different from said first scroll direction;
scrolling said input images in said list display area in said first scroll direction in case a touch position of a touch with a first sensor area (28a) of a touch sensor (28) disposed with said list display area shifts in said first scroll direction, and scrolling said designated image in said specific display area in said second scroll direction in case a touch position of a touch with a second sensor area (28b) of said touch sensor disposed with said specific display area shifts in said second scroll direction.

15. A computer-executable program for display processing, **characterized in** comprising:
a display program code for displaying a screen view (W1, W2) including a list display area (R1, R1a) and a specific display area (R2);
a first display control program code for displaying plural input images (P) in said list display area in a scrollable manner in a first scroll direction (X) selected from vertical and horizontal directions;
an image determining program code for designating at least one designated image (T) among said input images in said list display area;
a second display control program code for displaying said designated image in said specific display area in a scrollable manner in a second scroll direction (Y) selected from said vertical and horizontal directions and different from said first scroll direction;
a scroll control program code for scrolling said input images in said list display area in said first scroll direction in case a touch position of a touch with a first sensor area (28a) of a touch sensor (28) disposed with said list display area shifts in said first scroll direction, and for scrolling said designated image in said specific display area in said second scroll direction in case a touch position of a touch with a second sensor area (28b) of said touch sensor disposed with said specific display area shifts in said second scroll direction.
